Europäisches Patentamt

European Patent Office

Office européen des brevets

(19)

(11) Publication number: **0 004 439**
**B1**

(12) **EUROPEAN PATENT SPECIFICATION**

(45) Date of publication of patent specification: **29.12.82**

(51) Int. Cl.³: **F 16 H 17/06, B 60 K 41/26**

(21) Application number: **79300412.8**

(22) Date of filing: **15.03.79**

(54) Improvements in or relating to drive and brake assemblies.

(30) Priority: **22.03.78 GB 1138378**

(43) Date of publication of application:
**03.10.79 Bulletin 79/20**

(45) Publication of the grant of the patent:
**29.12.82 Bulletin 82/52**

(84) Designated Contracting States:
**DE FR GB IT NL SE**

(56) References cited:
**FR - A - 1 207 191**
**US - A - 3 202 012**
**US - A - 3 292 449**

(73) Proprietor: **CAM GEARS Limited**
**45, Wilbury Way Hitchin**
**Hertfordshire SG4 0TU (GB)**

(72) Inventor: **Adams, Frederick John**
**"Pelba" 27 Princes Road**
**Clevedon Avon (GB)**

(74) Representative: **Walters, Frederick James et al,**
**Urquhart-Dykes & Lord 47 Marylebone Lane**
**London W1M 6DL (GB)**

Courier Press, Leamington Spa, England.

Improvements in or relating to drive and brake assemblies

Technical Field

The invention relates to an assembly which comprises a transmission system having drive means providing an axially rotatable input to a fluid pressure responsive gear assembly which is infinitely variable between predetermined limits in response to variations in fluid pressure which are applied to the gear assembly, driven means coupled to be driven by an output of the gear assembly and a fluid pressure source which provides a variable fluid pressure output to which the gear assembly is responsive. Such a transmission system is conventional and it has previously been proposed in U.S. Patent No. 3,202,012 to combine with such a transmission system a braking system for braking the driven means independently of the drive means and a control system communicating between the braking system and the transmission system which control system is responsive to fluid pressure variations applied thereto upon actuation of the brake means and reacts on the gear assembly automatically upon actuation of the brake means to vary the gear ratio which is transmitted between the drive means and the driven means. With the aforementioned prior proposal the control system comprises a double acting piston and cylinder device operation of which causes an adjustment in the gear assembly to change the ratio. Control of the double acting piston and cylinder device is by use of a complex arrangement of spool valves and mechanical linkages which are responsive to actuation of the brake means to cause a change in the gear ratio when appropriate. Such a complex arrangement of control valves and mechanical linkages for effecting operation of a double acting piston and cylinder device are believed to be relatively expensive and unreliable bearing in mind the numerous settings which must be determined and maintained for the various components to provide efficient operation. It is an object of the present invention to provide an assembly of the kind discussed above which includes a relatively simple form of infinitely variable gear assembly which is controlled, in part, through a system which is responsive to fluid pressure variations which results from actuation of the brake means and which system is both relatively simple and inexpensive and which, upon actuation of the brake means, causes the gear ratio which is transmitted between the drive means and the driven means to be varied, as appropriate, both efficiently and reliably.

According to the present invention there is provided an assembly comprising a transmission system having drive means providing an axially rotatable input to a fluid pressure responsive gear assembly which is infinitely variable between predetermined limits in response to variations in fluid pressure applied thereto, driven means coupled to be driven by an output of the gear assembly, and a fluid pressure source providing a variable fluid pressure output to which the gear assembly is responsive; a braking system having brake means for braking the driven means and which brake means is operable independently of the drive means; a control system communicating between the braking system and the transmission system, said control system being responsive to fluid pressure variations applied thereto by and resulting from actuation of the brake means and reacting on the gear assembly automatically upon actuation of the brake means to vary the gear ratio which is transmitted between the drive means and the driven means, characterised in that the gear assembly comprises a drive face axially rotatable with said input and extending radially relative to the axis of rotation of the input; a roller rotatable about an axis which extends radially relative to the axis of the input and engaging the drive face to be rotated by drive therebetween; a single acting piston and cylinder device carrying the roller and defining a piston chamber expansion and contraction of which effects a displacement of the roller radially relative to the input axis and over the drive face to vary the ratio of drive which is transmitted between the drive face and the roller; spring biasing means by which the piston and cylinder device is biased to a contracted condition of the piston chamber which corresponds to a position of the roller in which minimum drive ratio is provided between the drive face and the roller, and wherein said control system comprises a valve which normally provides communication between the piston chamber and the fluid pressure source and is responsive to fluid pressure variations effected by operation of the braking system so that it opens communication between the piston chamber and an exhaust to permit the roller to be displaced by the spring biasing means to said minimum drive ratio position.

By the present invention it will be seen that upon actuation of the braking system, fluid pressure may develop in the control system to react on a simple valve which, as a consequence, is adjusted to open communication between the pressurised piston chamber of the piston and cylinder device and an exhaust (reservoir). Upon this latter communication being effected the piston and cylinder device is automatically adjusted under its spring biasing to displace the roller over the drive face and provide an appropriate variation in the drive ratio which is transmitted through the gear assembly. Such a simple arrangement alleviates the requirement for a complex system of valves and mechanical linkages in the control system whilst permitting the gear assembly to react under control of the spring biasing for the piston and cylinder device in an efficient manner. The simplicity of the assembly, particularly the component parts of the gear assembly and control system, renders it eminently suitable for inexpensive manufacture without detracting from the safety characteristics and reliability which are to be expected for integrated vehicle transmission and braking systems.

One embodiment of an assembly constructed in accordance with the present invention and incorporating a motor vehicle transmission system will now be described, by way of example only, with reference to the accompanying illustrative drawings, in which:—

Figure 1 is a section through a gear assembly which is incorporated in the transmission system;

Figure 2 is a section taken on the line A—A of the gear assembly in Figure 1;

Figure 3 diagrammatically illustrates an assembly according to the invention in which, for convenience, ground engaging driven wheels have been omitted from the transmission system and brake means for such wheels have been omitted from the braking system;

Figure 4 illustrates a valve incorporated in a control system between the braking and transmission systems, and

Figure 5 shows the valve of Figure 4 in a different mode of operation.

Where possible throughout the following description the same parts or members as referred to in each of the Figures have been accorded the same references.

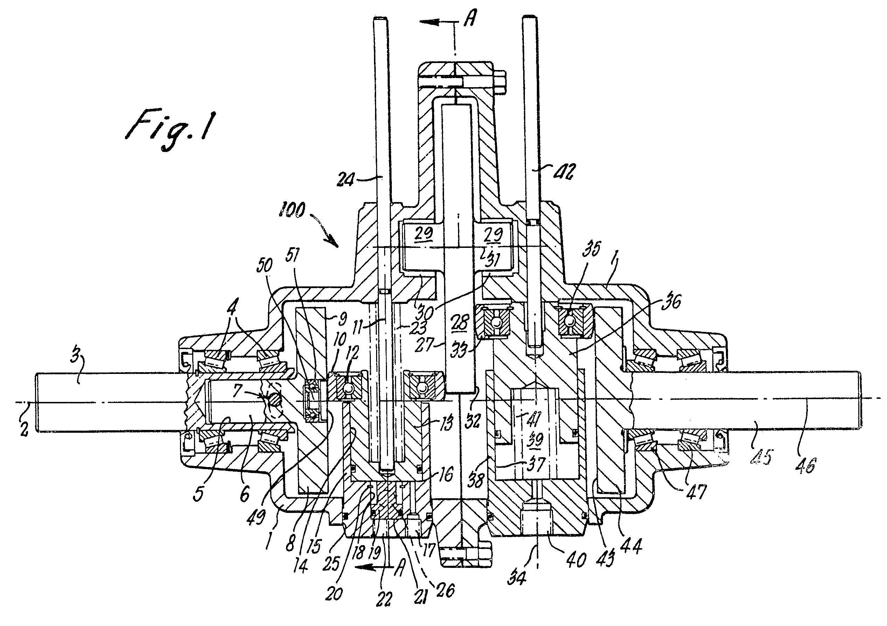

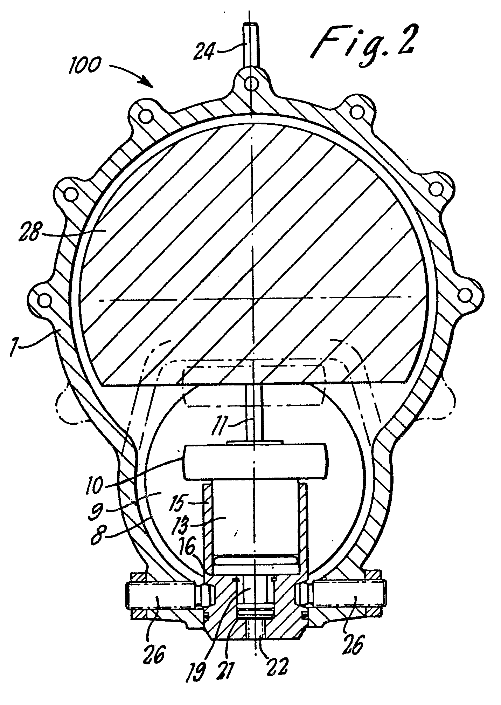

The gear assembly 100 which is incorporated in the transmission system and is shown particularly in Figures 1 and 2 is the subject of our co-pending European Patent Application 79300413.6 (Publication No. 0 004 440) and for convenience will be considered for oil film drive (it being realised however that friction drive can be employed if required). The gear assembly 100 has a housing 1 within which housing is an input shaft 3 having an axis of rotation 2. The shaft 3 is rotatably mounted in the housing 1 by inclined roller bearings 4 which co-operate between the shaft and the housing to restrain relative axial movement between the shaft 3 and the housing.

One end of the shaft 3 extends from the housing 1 for connection to drive means and the other, inner, end of the shaft has a blind bore 5 which receives a cylindrical spigot 6 co-axial with the shaft 3. The spigot 6 is coupled to the shaft 3 by a pin and "boomerang" shaped slot arrangement 7 so that the spigot is capable of restricted rotation relative to the shaft 3 and during such rotation in either one or the opposite sense of direction the spigot will be displaced axially relative to the shaft 3 in a direction rightwardly in Figure 1.

The spigot 6 is an integral part of a flange member 8 having a flat annular drive face 9 which is co-axial with the axis 2 and extends perpendicularly relative to that axis.

Capable of abutting the drive face 9 is an annular roller 10 which is mounted for rotation about an axis 11 extending substantially perpendicularly and radially relative to the axis 2. The roller 10 is rotatably mounted by a ball bearing 12 on a piston 13 slidably mounted in a cylinder 14 of a cylindrical piston housing 15. A piston chamber 16 is formed between the piston 13 and its cylinder and communicating with this chamber is a fluid pressure port 17. Also communicating with the piston chamber 16 is a secondary piston chamber 18 which is co-axial with the cylinder 14 and axially slidable within which is a secondary piston 19. The secondary piston 19 is capable of restricted axial displacement in its cylinder 18 to enter the piston chamber 16 and abut the piston 13. An annular ring or clip 20 is provided in the wall of the cylinder 18 to retain the secondary piston 19. The secondary piston 19 forms with its cylinder a secondary piston chamber 21 communicating with which is a fluid port 22. The piston and cylinder devices 13, 14 and 18, 19 are single acting and the piston 13 is biased relative to the housing 1 by a spring 23 in a sense to contract the pressure chamber 16 and, when the piston 13 is in abutment with the secondary piston 19, to contract the pressure chamber 21. Extending through the spring 23 is a piston rod 24 which communicates at one end with the piston 13 while its other end projects from the housing 1 in slidably sealed manner so that the piston rod 24 is displaceable along the axis 11 in unison with the piston 13. The piston rod 24 provides a convenient means for axially displacing the piston 13 manually.

The piston housing 15 is mounted in an aperture 25 in the wall of the housing 1 in sealed manner and is retained relative to the housing 1 against displacement in the direction of axis 11 by a pair of pivot pins 26 (see Figure 2). The piston housing 15 is mounted by the pins 26 to be capable of restricted pivotal movement substantially in a plane which includes the axes 2 and 11.

Diametrically opposed to the position of its abutment with the drive face 9, the roller 10 abuts a second drive face 27 formed by a flat side face of an annular disc 28 having shafts 29 which are integral and co-axial therewith and by which the disc 28 is mounted through needle rollers 30 in the housing 1 for rotation about an axis 31. The drive face 27 extends perpendicularly relative to the axis 31 which latter axis is parallel with the axis 2.

The annular side face of the disc 28 which is axially opposite to the face 27 provides a third drive face 32 which is parallel with face 27. In abutment with the face 32 is a second annular roller 33 which is mounted for rotation about an axis 34. The axis 34 extends substantially perpendicularly relative to the axis 31 and is substantially parallel with the axis 11

**0 004 439**

associated with the first roller 10. The roller 33, similarly to the roller 10, is rotatably mounted through a ball bearing 35 on a piston 36 which is slidable in the direction of the axis 34 in a cylinder 37 of a cylindrical piston housing 38. The piston housing 38 is mounted in an aperture in the wall of the housing 1 in sealed manner and is retained relative to the housing 1 against displacement in the direction of the axis 34 by a pair of pivot pins (not shown) similarly to the piston housing 15. The piston housing 38 is mounted by the pins associated therewith to be capable of restricted pivotal movement substantially in a plane which includes the axes 31 and 34. Formed between the piston 36 and its cylinder 37 is a variable pressure chamber 39 communicating with which is a fluid port 40. The piston 36 and cylinder 37 form a single acting device which, in the present embodiment, is intended to be operated by a reduction in air pressure or a vacuum applied to the chamber 39; consequently the piston 36 is biased by a spring 41 to an expanded condition of the chamber 39 in which the piston 36 abuts the wall of housing 1. Similarly to the piston 13, the piston 36 has connected thereto a piston rod 42 which projects in sealed manner through the wall of the housing 1 to slide in unison with the piston and provides a convenient means for manually displacing the piston in its cylinder 37.

At a position diametrically opposed to the position of engagement between the roller 33 and drive face 32, the roller 33 abuts a fourth drive face 43 formed by a circular end face on a flange 44 of an output shaft 45 which projects from the housing 1. The shaft 45 is mounted for rotation about an axis 46 which is co-axial with the axis 2 and the drive face 43 is flat and extends perpendicularly relative to the axis 46. The shaft 45 is rotatably mounted in the housing 1 by inclined roller bearings 47 which bearings are connected between the shaft and the housing to restrain relative axial displacement between those components.

Associated with the drive face 9 is a non-driving region formed by a circular flat face 49 of a rotor 50. The circular flat face 49 is located centrally of and is coplanar with the drive face 9 and the rotor 50 is freely mounted for co-axial rotation relative to the flange member 8 within which it is housed by a ball bearing 51. When the piston chamber 16 is in its fully contracted condition (which may be regarded as a neutral condition of the gear as shown in Figure 1) the roller 10 abuts the non-driving region 49 of the drive face 9 and in this condition the roller 10 also abuts the marginal outer edge portion of the drive face 27. Also in the neutral condition of the gear the roller 33 abuts the drive face 32 at a position radially inwardly of the roller 10 with respect to the axis 31.

The interior of the housing 1 is filled with a traction fluid such as a cycloaliphatic synthetic hydrocarbon fluid, for example, that made by Monsanto Limited and sold under the U.K. Registered Trade Mark "Santotrac", which is a fluid found suitable for oil film drives.

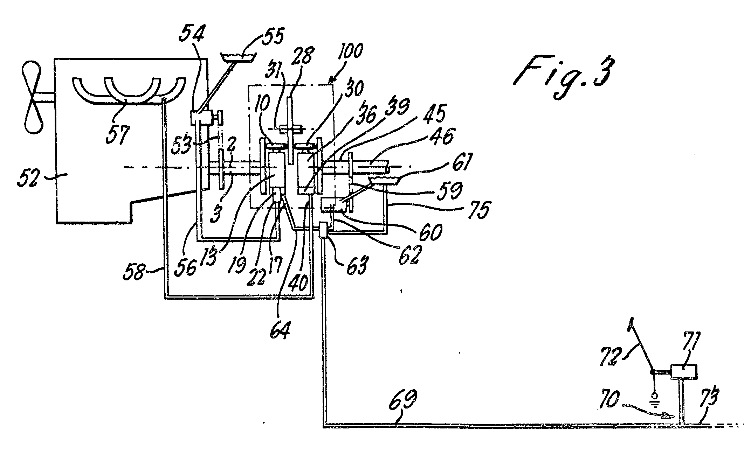

The shaft 3 is coupled to be rotatably driven by an internal combustion vehicle engine 52 (see Figure 3) and the flange member 8 is driven in unison therewith through the pin and slot arrangement 7. If however the gear is in its neutral condition with the roller 10 abutting the face 49 the latter rotates freely within the drive face 9 with the effect that no drive is transmitted to the roller 10 and through the gear assembly. The pin and slot arrangement 7 in Figure 1, as previously mentioned, is arranged to displace axially the flange member 8 relative to the shaft 3 and the slot is of "boomerang" shape relative to the axis 2 to ensure that when the shaft 3 is rotated the drive face 9 is urged into abutment with the roller 10.

If, while the shaft 3 is rotating, the piston 13 is displaced axially from the neutral condition as drawn so that the roller 10 moves into engagement with the drive face 9, an oil film drive is imparted from the drive face 9 to the roller 10 causing the latter to rotate about axis 11. Oil film engagement between the roller 10 and the drive face 27 causes the disc 28 to rotate about axis 31 and this drive is further transmitted through the gear by oil film engagement between roller 33 and drive face 32 which causes the roller 33 to rotate about axis 34 and oil film engagement between the roller 33 and the drive face 43 which causes the output shaft 45 to rotate about axis 46. It will be apparent that as the roller 10 is progressively displaced to a greater radius with respect to axis 2 the rotational speed of the roller progressively increases to drive the disc 28; however during such displacement of the roller 10 the position of its engagement with the drive face 27 decreases radially with respect to the axis 31. This latter displacement has the effect that as the roller 10 is displaced along the axis 11 from the position shown in Figure 1 to a position in which it is in alignment with the roller 33 the gear ratio in transmission from the roller 10 through the disc 28 to the roller 33 progressively increases to a 1:1 ratio. The roller 33 is also capable of displacement along the axis 34 to vary the radius (with respect to the axis 31) at which that roller engages the drive face 32; consequently by displacement of the pistons 13 and 36 to vary the position of engagement of their respective rollers with their drive faces 27 and 32 an infinitely variable gear ratio between predetermined limits is achieved, such gear ratio being less than one when the roller 10 is at a greater radius with respect to the axis 31 than is the roller 33, being one to one as aforementioned when the rollers 10 and 33 are in alignment (on an axis parallel to the axis 31) and being greater than one when the roller 33 is at a greater radius with respect to the axis 31 than is the roller 10. Furthermore, as the roller 33 is displaced radially progressively further from the axis 31, the radius of the contact circle between the roller 33 and the drive face 43 progressively decreases so that this provides a progressively increasing gear ratio (or decreasing mechanical advantage) to the drive which is transmitted to the output shaft 45.

Displacement of the rollers 10 and 33 along their respective axes 11 and 34 can be achieved manually by use of the piston rods 24 and 42 but the primary means for displacing the rollers is intended to be provided by fluid pressure variations in the chambers 16, 21 and 39. The displacement of piston 13 and thereby roller 10 can be responsive to variations from two separate fluid pressure sources one acting in the chamber 21 and the other acting in the chamber 16 whereas the piston 36 is responsive to variations in fluid pressure from a single source (or sink) such as a vacuum source. By the arrangement of the secondary piston 19 and the pressure chambers 16 and 21 associated with the piston housing 15 it will be seen that the piston 19, when fully displaced by maximum expansion of the chamber 21, is capable only of displacing the piston 13 (and thereby the roller 10) part way along the full stroke of the piston 13 whereas the expansion of the chamber 16 is capable of displacing the piston 13 over its full stroke from the position shown in Figure 1 to a position in which the piston abuts against the wall of the housing 1.

Referring now to Figure 3 which diagrammatically illustrates, in part, an assembly in accordance with the present invention incorporating the gear assembly 100, the engine 52 is coupled to drive the input shaft 3 and a take-off 53 from this shaft drives an hydraulic pump 54 drawing fluid from a reservoir 55. The output from the pump 54 varies in proportion with engine speed and this output passes by way of conduit 56 to the port 22 which feeds the pressure chamber 21 of the secondary piston 19. The engine 52 has an inlet manifold 57 which provides variations in low pressure or vacuum and this connects by way of a conduit 58 with the port 40 and therethrough with chamber 39. The output shaft 45 of the gear assembly 100 is coupled at 59 to drive an hydraulic pump 60 which draws fluid from a reservoir 61. The output shaft 45 is also coupled to driven ground engaging wheels (not shown) so that the transmission system basically comprises the engine 52, the gear assembly 100 and the driven wheels of the vehicle.

The output from pump 60 varies in proportion with the speed of rotation of the shaft 45 and this output passes by way of a conduit 62, a control valve 63 and conduit 64 to the inlet port 17 feeding pressure chamber 16 of piston 13.

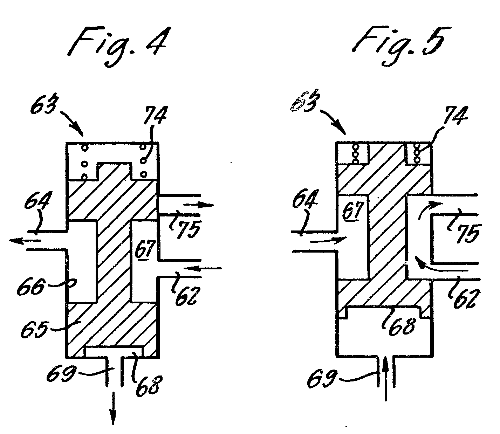

The control valve 63 (which forms part of a control system communicating between the transmission system and a braking system for the driven wheels of the vehicle) is shown in greater detail in Figures 4 and 5 and comprises a spool 65 axially slidable in a spool cylinder 66 formed by a spool housing. The spool has two axially spaced lands between which is formed a spool transfer chamber 67 which is in constant communication with the conduits 62 and 64 communicating between the pressure chamber 16 and the pump 60. Formed between a rebate in one end of the spool 65 and the opposing end of the spool cylinder 66 is a spool pressure chamber 68 which is in constant communication with a conduit 69 of the control system. As shown in Figure 3, the conduit 69 communicates with an hydraulic braking system (shown partly at 70) for the driven wheels of the vehicle. The braking system can be of conventional type having a master brake cylinder 71 actuated by a pedal 72 to apply hydraulic pressure by way of conduit 73 to operate the vehicle brakes.

The spool 65 of the control valve 62 is biased in its cylinder 66 by a spring 74 so that the spool normally abuts against the end of its cylinder where the chamber 68 is at a minimum volume. In this latter condition of the spool, a land thereof closes a port to a conduit 75 which communicates with the reservoir 61. The control valve 63 is arranged so that when the chamber 68 is pressurised and the spool 65 is displaced axially against its spring biasing from the position shown in Figure 4, the conduit 75 will open to communication with chamber 67 and thereby to communication with conduits 62 and 64 (as shown in Figure 5). Pressurisation of the chamber 68 will occur automatically to progressively displace the spool 65 as hydraulic pressure increases in the braking system 70 to actuate the vehicle brakes upon operation of the pedal 72.

Since the output shaft 45 in the transmission system is coupled to drive the ground engaging wheels, fluid pressure variations in the piston chambers 16, 21 and 39 will occur in response to engine speed and to vehicle speed so that the transmission ratio through the gear assembly 100 can be related to vehicle speed as sensed by the output from the pump 60.

By the arrangement above described with reference to Figure 3, when the input shaft 3 is rotatably driven by the engine 52 the pump 54 is operated to pressurise chamber 21 and thereby displace the secondary piston 19 and thereby the piston 13 and roller 10 to progressively increase the gear ratio as the engine speed increases until the piston 19 abuts stop 20. In addition, as the vehicle speed increases so does the output from the pump 60 and thereby (for so long as the braking system 70 is inoperative) the pressure in the piston chamber 16 increases to displace or further displace the piston 13 from its cylinder to a maximum extent where that piston abuts against the wall of the housing 1 to increase the gear ratio accordingly.

Upon throttling back or closing the engine throttle, there will be a corresponding decrease in pressure (or an increased vacuum effect) provided in the engine induction manifold 57 which reacts through the conduit 58 in the piston chamber 39 to displace the piston 36 downwardly in Figure 1 and so further vary (increase) the ratio which is transmitted through the gear assembly.

By incorporating the coupling 7 (which may be regarded as double acting) in the gear assembly 100 the torque of the engine 52 can be utilised to assist in braking of the vehicle upon a decrease in speed of the shaft 3 since the engagement between the roller 10 and drive face 9 will cause the coupling 7 to reverse, and the driven vehicle wheels to react against the engine torque.

The control valve 62 of the control system which communicates between the transmission system and the braking system 70 will serve to provide braking of the vehicle in addition to the braking system. Upon operation of the brakes by actuation of the braking system 70 the spool 65 is displaced against its spring biasing to open communication between conduits 62, 64 and 75 as aforementioned. Consequently, the output from pump 60 will pass directly to the reservoir 61 and the piston chamber 16 is also open to communication by way of chamber 67 and conduit 75 with the reservoir 61 (as shown in Figure 5); therefore any hydraulic fluid pressure in the chamber 16 is relieved automatically and the piston 13 will (unless resisted by the secondary piston 19) be displaced by the spring 23 downwardly in Figure 1 automatically to decrease the gear ratio so that the engine torque is used to brake the vehicle in addition to the braking system.

## Claim

An assembly comprising a transmission system having drive means (52) providing an axially rotatable input (3) to a fluid pressure responsive gear assembly (100) which is infinitely variable between predetermined limits in response to variations in fluid pressure applied thereto, driven means coupled to be driven by an output (45) of the gear assembly, and a fluid pressure source (54, 57, 60) providing a variable fluid pressure output to which the gear assembly (100) is responsive; a braking system (70) having brake means for braking the driven means and which brake means is operable independently of the drive means; a control system communicating between the braking system (70) and the transmission system, said control system being responsive to fluid pressure variations applied thereto by and resulting from actuation of the brake means and reacting on the gear assembly (100) automatically upon actuation of the brake means to vary the gear ratio which is transmitted between the drive means (52) and the driven means, characterised in that the gear assembly comprises a drive face (9) axially rotatable with said input (3) and extending radially relative to the axis of rotation (2) of the input (3); a roller (10) rotatable about an axis (11) which extends radially relative to the axis (2) of the input (3) and engaging the drive face (9) to be rotated by drive therebetween; a single acting piston and cylinder device (13, 14) carrying the roller (10) and defining a piston chamber (16) expansion and contraction of which effects a displacement of the roller radially relative to the input axis (2) and over the drive face (9) to vary the ratio of drive which is transmitted between the drive face (9) and the roller (10); spring biasing means (23) by which the piston and cylinder device (13, 14) is biased to a contracted condition of the piston chamber (16) which corresponds to a position of the roller (10) in which minimum drive ratio is provided between the drive face (9) and the roller (10), and wherein said control system comprises a valve (63) which normally provides communication between the piston chamber (16) and the fluid pressure source (54, 57, 60) and is responsive to fluid pressure variations effected by operation of the braking system so that it opens communication between the piston chamber (16) and an exhaust (61) to permit the roller to be displaced by the spring biasing means (23) to said minimum drive ratio position.

## Patentanspruch

Anordnung mit einer Übertragungseinrichtung mit Antriebsmitteln (52) zur Lieferung einer axialen Eingangsdrehung (3) für ein fluiddruckempfindliches Getriebe (100), dessen Übersetzungsverhältnis in Abhängigkeit der Änderungen des anliegenden Fluiddruckes zwischen vorgegebenen Grenzen stufenlos veränderbar ist, mit mit einem Ausgangsglied (45) des Getriebes gekuppelten und von diesem antreibbaren Getriebegliedern sowie einer Fluiddruckquelle (54, 57, 60) zwecks Abgabe eines veränderlichen Fluiddruckes für das davon abhängige Getriebe (100), mit einem Bremssystem (70) mit Mitteln für das Bremsen der antreibbaren Getriebeglieder, wobei die Bremsmittel unabhängig von den Antriebsmitteln (52) betätigbar sind, sowie mit einem auf die durch das Betätigen der Bremsmittel bewirkten Änderungen des Fluiddruckes ansprechendes Steuersystem zwischen dem Bremssystem (70) und der Übertragungseinrichtung, das selbsttätig auf das Getriebe (100) beim Betätigen der Bremsmittel zwecks Änderung des Übersetzungsverhältnisses zwischen den Antriebsmitteln (52) und den vom Ausgangsglied antreibbaren Getriebegliedern einwirkt, dadurch gekennzeichnet, daß das Getriebe (100) eine mit der Eingangsdrehung sich axial drehende, quer zur Drehachse (2) der Eingangsdrehung sich erstreckende Antriebsfläche (9) aufweist, daß eine um eine Achse (11) drehbare, zur Drehachse (2) radial sich erstreckende Rolle (10) in Eingriff mit der Antriebsfläche (9) vorgesehen ist, daß die Rolle (10) von einer einfach wirkenden Kolben-Zylinder-Vorrichtung (13, 14) mit einem definierten Kolbenraum (16) getragen ist, durch deren Aus- und Einfahren die Rolle (10) in bezug auf die Antriebsfläche (9) radial zur Achse (2) zwecks Änderung des von Antriebsfläche und Rolle übertragenen Übersetzungsverhältnisses verstellbar ist, daß Vorspannmittel (23) vorgesehen sind, um die Kolben-Zylinder-Vorrichtung (13, 14) in der eingefahrenen Stellung zu halten, die einer Position der Rolle (10) entspricht, in der das kleinste Übersetzungsverhältnis zwischen Antriebsfläche (9) und Rolle (10) besteht, und daß das Steuersystem ein Ventil (63) aufweist, das normalerweise eine Verbindung zwischen dem Kolbenraum (16) und der Fluiddruckquelle (54, 57, 60) bewirkt, und, abhängig von den durch Betätigen des Bremssystems hervorgerufenen Fluiddruck-Änderungen, die Verbindung zwischen dem Kolbenraum (16) und einem Auslaß (61) öffnet, um der Rolle (10) zu ermöglichen, daß sie über die Vorspannmittel (23) in die Position des kleinsten Übersetzungsverhältnisses bewegbar ist.

## Revendication

Ensemble comprenant un système de transmission avec des moyens d'entraînement (52) fournissant une sortie (3) rotative sur un axe à une unité de transmission (100) sensible à une pression de fluide et qui est susceptible de varier en continu entre des limites prédéterminées en réponse à des variations dans la pression du fluide qui lui est fourni, des moyens entraînés étant couplés de façon à être entraînés par une sortie (45) de l'unité de transmission, et une source de pression de fluide (54, 57, 60) fournissant une sortie à pression de fluide variable à laquelle réagit l'unité de transmission (100), un système de freinage (70) comportant des moyens de freinage pour freiner les moyens entraînés, ces moyens de freinage étant susceptibles de fonctionner indépendamment des moyens d'entraînement, un système de commande établissant une communication entre le système de freinage (70) et le système de transmission, ce système de commande étant sensible aux variations de pression du fluide qui lui est fourni par actionnement des moyens de freinage et comme résultat de cet actionnement, et réagissant automatiquement sur l'unité de transmission (100) lors de l'actionnement des moyens de freinage pour faire varier le rapport de transmission entre les moyens d'entraînement (52) et les moyens entraînés, ensemble caractérisé en ce que l'unité de transmission comporte une face d'entraînement (9) susceptible de tourner autour d'un axe avec l'entrée (3) et s'étendant radialement par rapport à l'axe de rotation (2) de l'entrée (3), un galet (10) susceptible de tourner autour d'un axe (11) qui s'étend radialement par rapport à l'axe (2) de l'entrée (3), ce galet venant en prise avec la face d'entraînement (9) de façon à être mis en rotation par elle, un dispositif piston et cylindre à simple action (13, 14) portant le galet (10) et délimitant une chambre de piston (16) dont l'expansion et la contraction se traduit par un déplacement radial du galet par rapport à l'axe d'entrée (2) et sur la face d'entraînement (9) afin de faire varier le rapport d'entraînement entre cette face d'entraînement (9) et le galet (10), un ressort (23) étant prévu, grâce auquel le dispositif piston et cylindre (13, 14) est sollicité vers un état de contraction de la chambre de piston (16) qui correspond à une position du galet (10) dans laquelle un rapport d'entraînement minimum est prévu entre la face d'entraînement (9) et le galet (10), ensemble dans lequel le système de commande comporte une vanne (63) qui normalement assure une communication entre la chambre piston (16) et la source de fluide sous pression (54, 57, 60) et la source de fluide sous pression (54, 57, 60) et qui réagit aux variations de la pression du fluide résultant et du fonctionnement du système de freinage, de sorte qu'elle ouvre la communication entre la chambre de piston (16) et une évacuation (61) afin de permettre au galet d'être déplacé par le ressort (23) vers cette position de rapport d'entraînement minime.

*Fig.1*

0 004 439

*Fig.2*

Fig.3

## Fig. 4

## Fig. 5